# EUROPEAN PATENT APPLICATION

(11) **EP 3 750 856 A1**
(43) Date of publication of application: **16.12.2020**
(21) Application number: 19179966.7
(22) Date of filing: 13.06.2019
(51) Int. Cl.: C04B 20/10, C04B 28/04, C04B 28/02, C04B 40/00

(54) **HYDROPHOBIC ADDITIVES FOR CONSTRUCTION MATERIALS**

(71) Applicant: Baerlocher GmbH, 85716 Unterschleissheim (DE)
(72) Inventor: Hauk, Jürgen, 85354 Freising (DE)
(74) Representative: Mathys & Squire

(57) **Abstract**

The present invention relates to hydrophobic additives comprising a mixture of one or more inorganic carrier particles, and one or more salts of one or more carboxylic acids or one or more carboxylic acids or in the alternative both of one or more salts of one or more carboxylic acids and one or more carboxylic acids, wherein the particle size distribution (psd) D90 of the mixture measured as powder is from 8 to 150 µm. The present invention further relates to intermediate compounds and mineral binders comprising a hydrophobic additive..

## Description

### FIELD OF THE INVENTION

The present invention relates to hydrophobic additives, methods for making them, and uses thereof. The present invention further relates to intermediate compounds and mineral binders comprising a hydrophobic additive.

### BACKGROUND OF THE INVENTION

Mineral construction materials, for example render for exterior walls, are often hydrophobized in order to substantially prevent the set materials from absorbing moisture from the environment. "Hydrophobing" is understood to mean the waterproofing of a construction material. This is believed to utilize a physicochemical effect which can be derived from the capillary laws. Hydrophobing is typically an impregnation process, with the aid of which generally the wetting angle of water with respect to the construction material is raised. The capillary adsorbtivity can be reduced or raised as a result, and the water absorption capacity of the construction materials is often reduced (the construction materials are hydrophobized), without the water vapor permeability, which is important for the breathing activity of the construction material, being altered significantly. This is believed to be attributable to the fact that there is generally no sealing of the capillaries, but instead, at least predominantly, merely coating of the capillary walls with substantial retention of the open-pore structure necessary for the diffusion processes. Hydrophobizations are accordingly generally not sealing measures.

According to the prior art, the hydrophobing agents used may be metal soaps or silicone compounds. The metal soaps are often salts of fatty acids having 18 carbon atoms, especially stearates and oleates. In addition, derivatives of fatty acids, such as esters, and fats and oils are used as hydrophobing agents. For example, EP 1 328 486 B1 relates to granulated hydrophobing additives for cement compositions containing salts of palmitic acid, stearic acid or oleic acid, an organopolysiloxane, and optionally paraffin and a binder. DE 103 23 205 A1 discloses hydrophobing additives based on fatty acids and derivatives thereof, which are used in conjunction with water-soluble protective colloids and optionally in combination with antiblocking agents and organosilicon compounds. DE 10 2004 059 377 A1 discloses a hydrophobing, water-redispersible polymer powder based on a polymer, a protective colloid and optionally further additives, such as fatty acids, fatty acid derivatives and antiblocking agents. Similar compositions are described in DE 10 2004 026 610 A1. EP 0 351 521 B1 describes primer compositions for a waterproofing agent, which comprises fatty acids, binders and organic solvents. EP 1 328 486 B1 describes a granulated hydrophobing agent for cement compositions, which comprises fatty acid salts of palmitic acid, stearic acid or oleic acid in conjunction with a water-soluble or water-dispersible binder and optionally an organopolysiloxane. Japanese published specification JP 02142880 A discloses the improvement of the water-repellent properties of gypsum by adding natural oils, such as linseed oils or coconut oil. DE 10 2008 045 041 B4 relates to a process for the preparation of a mixture comprising at least one inorganic solid and at least one fatty acid salt of a divalent or trivalent metal cation and at least one long chain fatty acid anion by treatment in a comminuting device.

One problem is that the handling of the known hydrophobing agents is not always satisfactory. For instance, the known agents such as zinc stearate are wettable only with difficulty, which complicates homogeneous incorporation into a construction material. Such hydrophobing agents therefore tend to form lumps, which impairs the water-repellent properties of the set component overall. It is therefore desirable to improve the incorporation of hydrophobing agents and to increase the homogeneity of hydrophobized mineral binding materials.

The hydrophobing agent should be preparable in a simple manner and inexpensively. It should have a high storage stability and be suitable for a broad spectrum of applications.

When applied in mineral binders, the hydrophobicity should be increased. Water-uptake (W-value) of the mineral binder should be decreased, in particular to 10 % or less, more preferably of 8 % or less or 5 % or less according to EN 1015-18. Further, the amount of active hydrophobing agent necessary to obtain such hydrophobicity of the mineral binder should be reduced.

### SUMMARY

These problems are solved by the present invention.

The present invention relates to hydrophobic additives comprising a mixture of one or more inorganic carrier particles, and one or more salts of one or more carboxylic acids or one or more carboxylic acids or in the alternative both of one or more salts of one or more carboxylic acids and one or more carboxylic acids, wherein the particle size distribution (psd) D90 of the mixture measured as powder is from 8 to 150 µm.

The hydrophobic additives may be obtained by
a. reaction of a reactive metal oxide or metal hydroxide or metal carbonate with one or more carboxylic acids under formation of one or more metal salts of one or more carboxylic acids as a product, and milling the product to a particle size distribution D90 in a range from 8 to 150 µm if the particle size distribution of the product is outside this range, or
b. mixing one or more inorganic carrier particles with one or more salts of one or more carboxylic acids at a temperature of more than 60°C under formation of a product, and milling the to a particle size distribution D90 in a range from 8 to 150 µm if the particle size distribution of the product is outside this range, or
c. mixing one or more inorganic carrier particles with one or more carboxylic acids at a temperature of more than 10°C, e.g., more than 15°C or more than 20°C, or more than 25°C, under formation of a product, and milling the to a particle size distribution D90 in a range from 8 to 150 µm if the particle size distribution of the product is outside this range, or
d. mixing one or more inorganic carrier particles with one or more salts of one or more carboxylic acids and one or more carboxylic acids at a temperature of more than 60°C under formation of a product, and milling the to a particle size distribution D90 in a range from 8 to 150 µm if the particle size distribution of the product is outside this range, or
e. reaction of one or more inorganic carrier particles selected from the group consisting of a reactive metal oxide or metal hydroxide with a triglyceride, preferably a natural, partially hydrogenated or fully hydrogenated fat or oil, preferably selected from the group consisting of cocos oil and palm kernel oil, under formation of one or more fatty acid metal salts as a product, and milling the product to a particle size distribution D90 in a range from 8 to 150 µm if the particle size distribution of the product is outside this range.

The present invention further relates to a mineral binder comprising a hydrophobic additive. The hydrophobic additive comprises a mixture of one or more inorganic carrier particles, and one or more salts of one or more carboxylic acids or one or more carboxylic acids or in the alternative both of one or more salts of one or more carboxylic acids and one or more carboxylic acids, wherein the particle size of the mixture is from 8 to 150 µm.

The present invention further relates to a process for the preparation of a hydrophobic additive, wherein
a. one or more inorganic carrier particles selected from the group consisting of a reactive metal oxide or metal hydroxide or metal carbonate are mixed and reacted with one or more carboxylic acids under formation of one or more metal salts of one or more carboxylic acids as a product, or
b. one or more inorganic carrier particles are mixed with one or more salts of one or more carboxylic acids at a temperature of 60°C or more than 60°C under formation of a product, or
c. one or more inorganic carrier particles are mixed with one or more carboxylic acids at a temperature of more than ambient temperature under formation of a product, or
d. one or more inorganic carrier particles are mixed with one or more salts of one or more carboxylic acids and one or more carboxylic acids at a temperature of 60°C or more than 60°C under formation of a product, or
e. reaction of one or more inorganic carrier particles selected from the group consisting of a reactive metal oxide or metal hydroxide with a triglyceride, preferably a natural, partially hydrogenated or fully hydrogenated fat or oil, preferably selected from the group consisting of cocos oil and palm kernel oil, under formation of one or more fatty acid metal salts as a product, and milling the product to a particle size distribution D90 in a range from 8 to 150 µm if the particle size distribution of the product is outside this range,
and milling the product to a particle size distribution D90 in a range from 8 to 150 µm if the particle size distribution of the product is outside this range, wherein the product is milled with a Malvern Mastersizer 2000 to have said particle size distribution (psd) D90 measured as powder.

The present invention further relates to an intermediate compound comprising 0.1 to 90% by weight of a hydrophobic additive, and 10 to 99.9% of one or more compounds selected from solvents, solubilizers, fillers, further hydrophobing agents, binders, surfactants, emulsifiers, viscosity improvers, surfactants, pigments, dyes, preservatives, gelating agents, anticaking agents, pH modifiers, buffers, reaction accelerants, reaction retardants, colloids, aerating agents, dispersible polymer powders, water retainers, and combinations of two or more thereof. The hydrophobic additive comprises a mixture of one or more inorganic carrier particles, and one or more salts of one or more carboxylic acids or one or more carboxylic acids or in the alternative both of one or more salts of one or more carboxylic acids and one or more carboxylic acids, wherein the particle size in the mixture is from 8 to 150 µm.

The present invention further relates to the use of a hydrophobic additive as described herein or of an intermediate compound as described herein for improving the hydrophobicity of a mineral binder mixture.

### BRIEF DESCRIPTION OF THE FIGURES

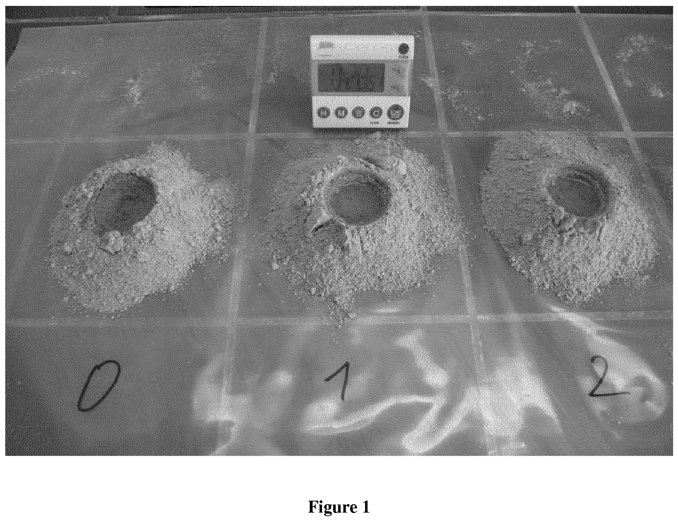

- **Figure 1**: represents the determination of the hydrophobicity of a lime-cement plaster by the Volcano test

### DEFINITIONS

A "hydrophobic additive" is a compound or composition that increases the hydrophobicity of a material when incorporated therein. The "hydrophobicity" can be expressed by the amount of water uptake of a material (W-value). An increase of hydrophobicity can be determined as the decrease of water uptake. The water uptake can be determined according to EN 1015-18.

In this text, the terms "particle size distribution D90", "particle size" and "psd" have the same meaning. The particle size distribution D90 as powder is measured with a Malvern Mastersizer 2000. The D90 is the diameter at which 90 % by weight of a sample have a smaller particle diameter than the D90 value. Accordingly, the D50 is the diameter at which 50 % by weight of a sample have a smaller particle diameter than the D50 value; it is also expressed as the "mass median diameter".

The term "mixture" relates to two or more components being used together in a composition, irrespective of its preparation. In the context of the present invention, the terms "mixture" and "combination" have the same meaning. This extends, for example, to the terms "a mixture of two or more thereof' and "a combination of two or more thereof' or related terms.

In this text, the terms "salt of a carboxylic acid" and "carboxylic acid salt" have the same meaning.

"Carboxylic acids" according to the present invention are compounds having at least one carboxyl group and branched or unbranched carbon chains. "Carboxylic acid salts" are understood in the context of the present invention to mean salts, especially the metal salts, of carboxylic acids.

Values in "%" hereinafter relate to "% by weight", unless indicated otherwise.

In the context of the present invention, "ambient temperature" means "room temperature", which is a temperature of 20-25°C. "More than ambient temperature" is a temperature of more than 25°C.

In the context of this invention, an "oil" is in the liquid state at 20°C, a "fat" is in the solid state at 20°C.

### DETAILED DESCRIPTION

### Hydrophobic additive

The present invention relates to a hydrophobic additive comprising a mixture of
a. one or more inorganic carrier particles and
b. one or more salts of one or more carboxylic acids or one or more carboxylic acids or in the alternative both of one or more salts of one or more carboxylic acids and one or more carboxylic acids,
wherein the particle size distribution D90 of the mixture is from 8 to 150 µm.

The particle size distribution D90 of the mixture is of from 8 to 150 µm, preferably from 8 to 100 µm, for example from 8 to 75 µm or from 8 to 50 µm.

### Component a.

In the mixture comprised in the hydrophobic additive according to the present invention, one or more inorganic carrier particles are comprised as component a. The inorganic carrier particles can be of any inorganic material that can form a mixture with a carboxylic acid, a carboxylic acid salt, or both. Preferred inorganic particles are inorganic metal salts.

For examples, the inorganic carrier particles are selected from metal oxides, metal hydroxides, metal carbonates, metal silicates, metal phosphates, metal sulfates or mixtures of two or more thereof. Preferably the inorganic particles are metal oxides, metal hydroxides, metal carbonates, or combinations of two or more thereof.

The metal or metals are for example selected from metals with a valence of 1, 2, 3 or 4, preferably 1 or 2. Suitable metal for the inorganic carrier particles are especially metal cations selected from the group of the cations of alkali metals, alkaline earth metals, zinc, aluminum, titanium, silicon and rare earths. Preferred alkali metals are lithium, sodium and potassium. Preferred alkaline earth metals are magnesium, calcium, strontium and barium. Among the rare earths, especially cerium and lanthanum are suitable.

It may be preferred that the metal is selected from the group consisting of Li, Na, K, Ca, Mg, Ba, Zn, Al, Ti, Si and combinations of two or more thereof. More preferably, the metal is selected from Mg and Ca.

Preferred inorganic carrier particles are selected from oxides, hydroxides, carbonates, silicates, phosphates, sulfates of Li, Na, K, Ca, Mg, Ba, Zn, Al, Ti, Si and mixtures of two or more thereof. More preferred are oxides and hydroxides of Mg and Ca. Most preferred is magnesium hydroxide.

The particle size (D90) of the inorganic carrier particles is preferably in the range of from 2 to 60 µm e.g., 5 to 50 or 10 to 40 µm.

### Component b.

In the mixture comprised in the hydrophobic additive according to the present invention, one or more salts of one or more carboxylic acids, or one or more carboxylic acids, or in the alternative both of one or more salts of one or more carboxylic acids and one or more carboxylic acids are comprised as component b.

Carboxylic acids according to the present invention are preferably mono- or polycarboxylic acids having at least 6 carbon atoms, i.e. compounds which have at least one carboxyl group and branched or unbranched carbon chains. The carbon chains may additionally bear double bonds, hydroxyl groups or epoxy groups.

For example, the carboxylic acids have 6 to 14 carbon atoms, preferably 8 to 14 carbon atoms. Suitable carboxylic acids are for example selected from salts of caprylic acid, pelargonic acid, capric acid, lauric acid, myristic acid and undecylenic acid.

The mixture may comprise one or more than one carboxylic acid. Where more than one carboxylic acid is comprised, the proportion of the carboxylic acids having 6 to 14 carbon atoms in all of the carboxylic acids in the mixture is more than 30, 50, 60, 70 or 80 % by weight.

The proportion of carboxylic acids having 8 to 14 carbon atoms is 10 % by weight or more than 10 % by weight, for example more than, based on the total amount of carboxylic acids, for example, 20 % by weight or more than 20 % by weight or 30 % by weight or more than 30 % by weight or 40 % by weight or more than 40 % by weight or 50 % by weight or more than 50 % by weight or 60 % by weight or more than 60 % by weight or 70 % by weight or more than 70 % by weight or 75 % by weight or more than 75 % by weight.

The carboxylic acid which amounts to the greatest proportion in percent by weight of all of the carboxylic acids has 8 to 14 carbon atoms, and more preferably is lauric acid or myristic acid.

The mean chain length of all of the carboxylic acids present in the mixture is 8 to 14 carbon atoms, especially 10 to 14 carbon atoms.

It may be preferred that the one or more carboxylic acids comprise one or more carboxylic acids with 10 to 16 C-atoms, preferably 12 to 14 C-atoms, in an amount of at least 50 % by weight.

Carboxylic acid salts according to the present invention are salts, especially the metal salts, of the above-mentioned carboxylic acids. Examples and preferences disclosed for the above-mentioned carboxylic acids apply also for as examples and preferences for the carboxylic acids being the basis of the carboxylic acid salts. Suitable metal for the carboxylic acid salts are especially metal cations selected from the group of the cations of alkali metals, alkaline earth metals, zinc, aluminum and rare earths. Preferred alkali metal salts are the salts of lithium, sodium and potassium. Preferred alkaline earth metal salts are the salts of magnesium, calcium, strontium and barium. Among the salts of the rare earths, especially cerium and lanthanum are suitable. For example, the metals for the carboxylic acid salts are selected from the group consisting of Na, K, Mg and Ca. More preferably, the carboxylic acid salts are Mg salts.

The salts of one or more carboxylic acids may comprise a salt of a carboxylic acid with 6 to 14 C-atoms or a mixture of two or more salts of carboxylic acids with 6 to 14 C-atoms. The carboxylic acid salts are preferably selected from salts of caprylic acid, pelargonic acid, capric acid, lauric acid, myristic acid and undecylenic acid.

It may be preferred that the one or more carboxylic acid salts comprise one or more carboxylic acid salts with 10 to 16 C-atoms, preferably 12 to 14 C-atoms, in an amount of at least 50 % by weight.

The salts of one or more carboxylic acids may comprise one or more salts of carboxylic acids with 10 to 16 C-atoms in an amount of at least 50 % by weight, or the one or more carboxylic acids may comprise one or more carboxylic acids with 10 to 16 C-atoms in an amount of at least 50 % by weight, or both, based on the total amount of carboxylic acids and salts of carboxylic acids.

The salts of one or more carboxylic acids may comprise one or more salts of carboxylic acids with 12 to 14 C-atoms in an amount of at least 50 % by weight, or the one or more carboxylic acids may comprise one or more carboxylic acids with 12 to 14 C-atoms in an amount of at least 50% by weight, or both, based on the total amount of carboxylic acids and salts of carboxylic acids.

The amount of carboxylic acids and salts of carboxylic acids with 10 to 16 C-atoms may be at least 50 % by weight, preferably at least 55 % by weight, more preferably at least 60 % by weight, based on the total amount of carboxylic acids and salts of carboxylic acids in the mixture. The amount of carboxylic acids and salts of carboxylic acids with 12 to 14 C-atoms may be at least 50 % by weight, preferably at least 55 % by weight, more preferably at least 60 % by weight, based on the total amount of carboxylic acids and salts of carboxylic acids in the mixture.

The amount of salts of one or more carboxylic acids or the amount of one or more carboxylic acids or the amount of a mixture of one or more salts of one or more carboxylic acids and one or more carboxylic acids in the additive may be from 3 to 30 % by weight, preferably from 5 to 30 % by weight, for example from from 10 to 28 % by weight, more preferably from 15 to 25 % by weight..

The carboxylic acids and salts of carboxylic acids may be hydrolysis products of a natural fat or oil. "Natural" in the context of the invention means that the fat or oil originates from a natural source. The fat or oil may, however, also be after-treated in accordance with the invention, for example by partial or full hydrogenation or by epoxidation of double bonds. Additives may also be added to the fat or oil. Particularly suitable in accordance with the invention are natural fats or oils which contain a comparatively high proportion of fatty acids with short chain lengths. Particular preference is given in accordance with the invention to the use of coconut oil, especially of coconut oil with a high proportion of lauric acid (from 45 to 51 % by weight) and myristic acid (17.5 to 20.5 % by weight), which is also referred to as coconut fat or coconut butter. Also suitable is palm kernel fat, especially of palm kernel fat with a high proportion of lauric acid (from 45 to 51 % by weight) and myristic acid (15.5 to 18.5 % by weight). The natural fats can be hydrolyzed, for example, by addition of metal oxides and metal hydroxides, preferably alkali and earth alkali metal oxides and hydroxides.

It may also be preferred that the amount of carboxylic acids and salts of carboxylic acids with more than 16 C-atoms is 30 % by weight or less, based on the total amount of carboxylic acids and salts of carboxylic acids.

The hydrophobic additive may comprise 65 to 97 % by weight, preferably 65 to 95 % by weight, more preferably 68 to 90 % by weight, even more preferably from 70 to 85 % by weight of inorganic carrier particles, and 3 to 35 % by weight, preferably 5 to 35 % by weight, more preferably 10 to 32 % by weight, even more preferably from 15 to 30 % by weight of one or more salts of one or more carboxylic acids or one or more carboxylic acids or both.

The weight ratio of components a. and b. in the hydrophobic additive according to the invention may be in the range of from 99:1 to 50:1, preferably from 97:3 to 65:35, more preferably from 95:5 to 65:35, for example from 90:10 to 68:32, even more preferably from 85:15 to 70:30.

The hydrophobic additive may comprise one or more further components. Such further components can, in combination with the mixture, increase the hydrophobing properties of the hydrophobic additive in a synergistic manner. Such further components can provide oleophobic properties. Suitable further components are for example soaps, preferably alkali soaps, silicon-containing compounds, mineral oil like white oil, paraffin oil, alkene, naphthene etc., natural oils like rapseed, sunflower, soybean oil etc., and fluorohydrocarbons.

In the context of the present invention, "soaps" are understood to mean fatty acid salts of the linear or branched, saturated or unsaturated carboxylic acids having 6 to 22, preferably 12 to 18 carbon atoms, where the cation present may, for example, be an alkali metal and/or alkaline earth metal, ammonium, alkylammonium or alkanolammonium ion. The soaps mentioned here should be understood as an addition to any carboxylic acid salts present in the inventive mixture, and the optional list given here does not affect information regarding carboxylic acid salts whose presence in the inventive composition is obligatory. When information regarding optionally present fatty acid salts contradicts information regarding obligatorily present carboxylic acid salts, the information regarding the obligatorily present carboxylic acid salts takes precedence in each case. This is true, for example, for substance information, and likewise for quantitative information.

Using a soap as a further component of the hydrophobic additive means that the hydrophobic additive comprises the claimed mixture and in addition the soap as a further hydrophobing agent. It may for example be preferred that component b. is an earth alkali metal salt of a carboxylic acid, preferably a magnesium or calcium salt, and the additional soap is an alkali metal salt of a carboxylic acid, preferably a sodium or potassium salt.

Typical examples are the sodium, potassium, magnesium, ammonium and triethanolammonium salts of caproic acid, caprylic acid, 2-ethylhexanoic acid, capric acid, lauric acid, isotridecanoic acid, myristic acid, palmitic acid, palmoleic acid, stearic acid, isostearic acid, oleic acid, elaidic acid, petroselic acid, linoleic acid, linolenic acid, eleostearic acid, arachic acid, gadoleic acid, behenic acid and erucic acid, and the technical-grade mixtures thereof. For example, coconut fatty acid or palm kernel fatty acid are used in the form of the sodium or potassium salts thereof. Preferred soaps are sodium oleate, potassium oleate, sodium cocoate and potassium cocoate.

Suitable silicon-containing compounds are for example silica, siloxane, silicates, silica gels,
It may be preferred that the ratio of the mixture to the further component, preferably selected from soaps, silicon-containing compounds and fluorohydrocarbons, is in the range of from 1:99 to 99:1, 1:90 to 90:1, 30:70 to 70:30, or 45:55 to 55:45, preferably from 90:10 to 50:50.

In general, the hydrophobic additive can be obtained by any method resulting in the hydrophobic additive according to the present invention.

The hydrophobic additive may for example be obtained by reaction of one or more inorganic carrier particles selected from the group consisting of a reactive metal oxide or metal hydroxide or metal carbonate with one or more carboxylic acids under formation of one or more metal salts of one or more carboxylic acids as a product, and milling the product to a particle size distribution D90 in a range from 8 to 150 µm if the particle size distribution of the product is outside this range. Preferred metal oxides, metal hydroxides and metal carbonates are described above with regard to "component a.". Preferred carboxylic acids are described above with regard to "component b.". It may be preferred that the reaction is carried out at a temperature of more than ambient temperature, preferably more than 50°C, more preferably at 80°C to 160°C.

The hydrophobic additive may for example be obtained by mixing one or more inorganic carrier particles with one or more salts of one or more carboxylic acids at a temperature of 60°C or more than 60°C under formation of a product, and milling the product to a particle size distribution D90 in a range from 8 to 150 µm if the particle size distribution of the product is outside this range. Preferred inorganic carrier particles are described above with regard to "component a.". Preferred salts of carboxylic acids are described above with regard to "component b.". It may be preferred that the mixing is carried out at a temperature of from 60 to 140°C.

The hydrophobic additive may for example be obtained by mixing one or more inorganic carrier particles with one or more carboxylic acids at a temperature of more than ambient temperature under formation of a product, and milling the product to a particle size distribution D90 in a range from 8 to 150 µm if the particle size distribution of the product is outside this range. Preferred inorganic carrier particles are described above with regard to "component a.". Preferred carboxylic acids are described above with regard to "component b.". It may be preferred that the mixing is carried out at a temperature of more than 50°C, more preferably from 60 to 140°C.

The hydrophobic additive may for example be obtained by mixing one or more inorganic carrier particles with one or more salts of one or more carboxylic acids and one or more carboxylic acids at a temperature of 60°C or more than 60°C under formation of a product, and milling the product to a particle size distribution D90 in a range from 8 to 150 µm if the particle size distribution of the product is outside this range. Preferred inorganic carrier particles are described above with regard to "component a.". Preferred salts of carboxylic acids and carboxylic acids are described above with regard to "component b.". It may be preferred that the mixing is carried out at a temperature of from 60 to 140°C.

The hydrophobic additive may for example be obtained by reaction of a reactive metal oxide or metal hydroxide with a triglyceride, preferably a natural, partly or fully hydrogenated fat or oil, preferably selected from the group consisting of cocos oil and palm kernel oil, under formation of one or more metal salts of a fatty acid as a product, and milling the product to a particle size distribution D90 in a range from 8 to 150 µm if the particle size distribution of the product is outside this range. Preferred metal oxides and metal hydroxides are described above with regard to "component a.". It may be preferred that the reactive metal oxides and metal hydroxides are selected from the group consisting of magnesium and calcium oxides and hydroxides, and sodium and potassium oxides and hydroxides. Where the reactive metal oxides and metal hydroxides are sodium or potassium oxides or hydroxides, it is preferred that one or more inorganic particles as described above with regard to "component a." are added to the reaction mixture.

The one or more salts of one or more carboxylic acids, or one or more carboxylic acids, or both can be added to the inorganic carrier particles in liquid form, dissolved in a solvent or suspended in a liquid suspension medium. Where a solvent or suspension medium is used, it can be removed prior to milling.

Suitable solvents and suspension media are for example water, organic solvents such as alcohols, for example ethanol, or oils such as natural oil, mineral oil and liquid silicon derivatives.

Where the hydrophobic additive comprises further components, for example selected from soaps, preferably alkali soaps, silicon-containing compounds and fluorohydrocarbons, it is preferred that a mixture is provided as described above, and subsequently the further components are added and mixed with the mixture to provide the hydrophobic additive.

The inventive hydrophobic additive can in principle be used for any purposes. However, it has been found in the context of the present invention that the hydrophobic additive has excellent suitability for imparting particular properties to construction materials with regard to the interaction thereof with water, more particularly for hydrophobizing these construction materials. An inventive hydrophobic additive is thus suitable as a hydrophobing agent. When reference is made to hydrophobing agents in the context of the present text, this should also be understood as a reference to the inventive hydrophobic additive.

An inventive hydrophobic additive may be present, for example, as a granule, powder, solution, dispersion or emulsion. It is preferred in some cases when the inventive hydrophobic additive is provided, for example, in the form of a granule. Such a granulated hydrophobic additive can be prepared by customary or known granulation processes. In a further embodiment of the invention, the inventive hydrophobic additive can be used as a powder. Such powders can be applied to the surface of the grains of the construction material, for example, by mixing with a construction material, for example a mortar. The inventive hydrophobic additive may also be present on a carrier material and, for example, have a structure corresponding to a core-shell structure. A core-shell structure is understood in the context of the present invention to mean a structure in which the composition of the solid particle, proceeding from the center of the particle, toward the edges changes in such a way that the edge has a different composition than the middle. In the context of the present invention, such changes may be continuous or essentially discontinuous, or be a mixture of the two phenomena. A "predominantly core-shell structure" is understood in the context of the present invention to mean the finding that the core-shell structure can be detected for at least about 40 % of the surface of the solid particle. Corresponding detection methods are known to those skilled in the art; for example, the solid particles can be analyzed by electron microscopy. The core materials used in the context of the present invention are, for example, inorganic carriers such as chalk or titanium dioxide, inorganic porous carriers such as montmorillonite, bleaching earth and the like, organic carriers such as starch, microcellulose and the like, and also zeolites or hollow microbodies, or mixtures of two or more thereof.

### Construction material

The present invention relates to a construction material comprising the above-described hydrophobic additive. The construction material is selected from the group consisting of mineral binders, synthetic resin renders, and paints.

The mineral binder comprises a mineral binder material, for example mortar, lime, cement or concrete. It may optionally comprise a solvent, especially water. Preferably, the mineral binder material is selected from the group consisting of screed, render, construction adhesive, spackling compound, leveling compound, sealing compound, jointing mortar, hybrid materials such as lightweight concrete with wood shavings or wood flour, gypsum fiber board, cement fiber board, gypsum, silicat plaster, calcium aluminate concrete, sorel concrete, and calcium sulfoaluminate (CSA).

The term "render" in the context of mineral binders refers to the solid mortar applied and solidified on the built structure. The render can for example be a cement render, especially a lime cement render. A render mortar comprises at least one binder material. The mineral materials used may, for example, be cements, lime-cement mixtures or lime mixtures. The production and processing of render mortars as a construction material for production of render is divided into five groups according to DIN 18550. According to the invention, the hydrophobing agent is used, for example, for render mortars from the groups of lime mortar (mixture of sand and quicklime), lime-cement mortar (mixture of sand, quicklime and cement), cement mortar (mixture of sand and cement) and anhydrite mortar (mixture of sand and anhydrite). Exterior renders used are especially lime-cement mortar and cement mortar.

Synthetic resin renders are made to look like mineral render. They are typically made of organic binders (e.g. organic polymers such as acrylate-based polymers and methacrylate-based polymers) with fillers (e.g., sand), aggregates (e.g., organic or mineral aggregates, preferably with a particle size of more than 250 µm), or both. They can be provided in the form of a polymer dispersion or solution. It may be preferred that synthetic resin renders do not contain inorganic binder fractions such as cement or lime.

Paints according to the present invention are pigmented liquid, liquefiable or mastic compositions that can be converted to a solid film after application to a substrate. Paints comprise a binder (film former), preferably a polymeric binder, preferably including synthetic or natural resins such as alkyds, acrylics, vinyl-acrylics, vinyl acetate/ethylene (VAE), polyurethanes, polyesters, melamine resins, epoxy, silanes, silicon, siloxanes, oils, or a combination of two or more thereof.

Paints further comprise a pigment or dye or both.

Paints may further comprise diluents or solvents, fillers, additives or a combination of two or more thereof. A diluent or solvent is preferably used if the binder is too thick to be applied. For examples, surface tension modifiers, flow agents, finishing agents, wetting agents, pigment stabilizers, antifreezing agents, antifoaming agents, catalysts, thickeners, stabilizers, emulsifiers, texturizers, adhesion promoters, UV stabilizers, de-glossing agents, biocides, or combinations of two or more thereof may be used as additives. Such additives are known in the art as additives for paints.

The preferred proportion of the mineral binder material in the mineral binder, of the organic binder in the synthetic resin render, and of the film former in the paint is in the range of from 15 to 80 % by weight, for example from 15 to 70 % by weight or from 15 to 60 % by weight or from 15 to 50 % by weight or from 15 to 40 % by weight, more preferably from 15 to 35 % by weight.

The preferred proportion of the inventive hydrophobic additive in the mineral binder, synthetic resin render or paint is of from 0.01 and 5 % by weight, but is preferably between 0.01 and 2 % by weight, more preferably between 0.03 and 1 % by weight and between 0.04 and 0.7 % by weight, based on the total weight of the mineral binder, synthetic resin render or paint. In exemplary embodiments, at least 0.02 or 0.05 % by weight, and up to 1.5, 1.3, 1.1 or 0.8 % by weight of the inventive hydrophobic additive is present, based on the total weight of the mineral binder, synthetic resin render or paint.

The inventive mineral binder, synthetic resin render or paint can be processed, for example, with the additives referred to below. It is at the discretion of the person skilled in the art whether these additives are added to the hydrophobic additive or directly to the mineral binder, synthetic resin render or paint.

The mineral binder, synthetic resin render or paint may comprise additives. It may be preferred that the mineral binder, synthetic resin render or paint contains at least one additive.

Suitable additives are, for example, solvents, binders, solubilizers, fillers, further hydrophobing agents, surfactants, emulsifiers, viscosity improvers, pigments, dyes, preservatives, gelating agents, anticaking agents, pH modifiers, buffers, reaction accelerants, reaction retardants, colloids, processing aids, polymers or air entrainers, or mixtures of two or more thereof. Preferably, the mineral binder, synthetic resin render or paint contains at least one additive selected from solvents, binders, polymers, colloids, surfactants, emulsifiers, or a mixture of two or more thereof.

Solvents are present in the mineral binder, synthetic resin render or paint, for example, when it is to be used as a liquid composition. Suitable solvents are, for example, water or organic solvents such as alcohols, for example ethanol.

Suitable binders are, for example, water-soluble or water-dispersible binders. Such substances are known in the literature. Preference is given to using substances which have a waxy, highly viscous or solid consistency at room temperature, i.e. between 20 and 25°C, and which have a melting point of 25°C to 150°C. Examples of customary corresponding binding materials are polyvinyl alcohol, methylcellulose, carboxymethylcellulose, ethoxylated fatty alcohols or mixtures thereof. In addition, it is possible to use fatty acid esters or film-forming polymers. The binding materials should disrupt the hydration process of the construction material to a minimum degree, if at all, when water is introduced.

The mineral binder, synthetic resin render or paint may comprise a dispersion powder. Preferred dispersion powders are homopolymers and copolymers of C₁-C₂₀ vinylester, in particular copolymers of C₁-C₂₀ vinylester with ethylen or vinylchloride, homopolymers and copolymers of C₁-C₂₀ alkylesters of (meth)acrylic acid, in particular copolymers of C₁-C₂₀ alkylesters of (meth)acrylic acid with acrylamide, styrol, styrol derivatives or butadiene.

An inventive mineral binder, synthetic resin render or paint may comprise one or more surfactants or emulsifiers. Examples of suitable surfactants or emulsifiers include anionic surfactants, nonionic surfactants or cationic surfactants. It has been found in some cases that the presence of surfactants lowers the amount of hydrophobing agent required to achieve a desired hydrophobing effect. This does not correspond to expectation on addition of a hydrophilic substance and is, without wishing to be bound to a particular theory, possibly attributable to improved distribution of the surfactant in the mineral binder, synthetic resin render or paint.

Typical examples of anionic surfactants suitable in the context of the present invention are soaps, alkylbenzene sulfonates, secondary alkanesulfonates, olefin sulfonates, alkyl ether sulfonates, glyceryl ether sulfonates, α-methyl ester sulfonates, sulfo fatty acids, alkyl and/or alkenyl sulfates, alkyl ether sulfates, glyceryl ether sulfates, hydroxy mixed ether sulfates, fatty alcohol (ether) phosphates, monoglyceride (ether) sulfates, fatty acid amide (ether) sulfates, mono- and dialkyl sulfosuccinates, mono- and dialkyl sulfo succinamates, sulfotriglycerides, amide soaps, ether carboxylic acids and salts thereof, fatty acid isethionates, fatty acid sarcosinates, fatty acid taurides, N-acylamino acids, for example acyl lactylates, acyl tartrates, acyl glutamates and acyl aspartates, alkyloligoglucoside sulfates, protein fatty acid condensates (especially wheat-based vegetable products) and alkyl (ether) phosphates. When the anionic surfactants contain polyglycol ether chains, they may have a conventional, but preferably a narrowed, homolog distribution. Preference is given to anionic surfactants selected from the group formed by alkyl and/or alkenyl sulfates, alkyl ether sulfates, alkylbenzenesulfonates, soaps, monoglyceride (ether) sulfates and alkanesulfonates, especially fatty alcohol sulfates, fatty alcohol ether sulfates, secondary alkanesulfonates and linear alkylbenzenesulfonates.

Alkyl and/or alkenyl sulfates, which are also frequently referred to as fatty alcohol sulfates, are understood to mean the sulfation products of primary alcohols. Typical examples of alkyl sulfates which may find use in the context of the invention are the sulfation products of caproyl alcohol, caprylyl alcohol, capryl alcohol, 2-ethylhexyl alcohol, lauryl alcohol, myristyl alcohol, cetyl alcohol, palmoleyl alcohol, stearyl alcohol, isostearyl alcohol, oleyl alcohol, elaidyl alcohol petroselinyl alcohol, arachyl alcohol, gadoleyl alcohol, behenyl alcohol and erucyl alcohol, and the technical-grade mixtures thereof, which are obtained by high-pressure hydrogenation of technical-grade methyl ester fractions or aldehydes from the Roelen oxo process. The sulfation products can preferably be used in the form of the alkali metal salts and more particularly the sodium salts thereof. Particular preference is given to alkyl sulfates based on C_{16/18} tallow fatty alcohols or vegetable fatty alcohols of comparable carbon chain distribution, in the form of the sodium salts thereof.

Alkyl ether sulfates ("ether sulfates") are known anionic surfactants which are prepared on the industrial scale by SO₃ sulfation or chlorosulfonic acid (CSA) sulfation of fatty alcohol polyglycol ethers or oxo alcohol polyglycol ethers, and subsequent neutralization. Typical examples are the sulfates of addition products of an average of 1 to 10 mol and especially 2 to 5 mol of ethylene oxide onto caproyl alcohol, caprylyl alcohol, 2-ethylhexyl alcohol, capryl alcohol, lauryl alcohol, isotridecyl alcohol, myristyl alcohol, cetyl alcohol, palmoleyl alcohol, stearyl alcohol, isostearyl alcohol, oleyl alcohol, elaidyl alcohol, petroselinyl alcohol, arachyl alcohol, gadoleyl alcohol, behenyl alcohol, erucyl alcohol and brassidyl alcohol, and the technical-grade mixtures thereof in the form of the sodium and/or magnesium salts thereof. The ether sulfates may have either a conventional or a narrowed homolog distribution. Particular preference is given to the use of ether sulfates based on adducts of an average of 2 to 3 mol of ethylene oxide on technical-grade C_{12/14} or C_{12/18} coconut fatty alcohol fractions in the form of the sodium and/or magnesium salts thereof.

The alkylbenzene sulfonates used may, for example, be dodecylbenzene sulfonates, tetradecylbenzene sulfonates, hexadecylbenzene sulfonates, and the technical-grade mixtures thereof in the form of the sodium salts.

Soaps as described as suitable further components for the hydrophobic additive are also suitable additives of the mineral binder, synthetic resin render or paint. Thus, the description and preferences given in the context of the hydrophobic additive also applies for the soaps for use as additives of the mineral binder, synthetic resin render or paint. Typical examples are the sodium, potassium, magnesium, ammonium and triethanolammonium salts of caproic acid, caprylic acid, 2-ethylhexanoic acid, capric acid, lauric acid, isotridecanoic acid, myristic acid, palmitic acid, palmoleic acid, stearic acid, isostearic acid, oleic acid, elaidic acid, petroselic acid, linoleic acid, linolenic acid, eleostearic acid, arachic acid, gadoleic acid, behenic acid and erucic acid, and the technical-grade mixtures thereof. For example, coconut fatty acid or palm kernel fatty acid are used in the form of the sodium or potassium salts thereof. Preferred soaps are sodium oleate, potassium oleate, sodium cocoate and potassium cocoate.

Monoglyceride sulfates and monoglyceride ether sulfates are known anionic surfactants which can be obtained by the appropriate methods of preparative organic chemistry. Typically, they are prepared proceeding from triglycerides which, optionally after ethoxylation, are transesterified to the monoglycerides and then sulfated and neutralized. It is likewise possible to react the partial glycerides with suitable sulfating agents, preferably gaseous sulfur trioxide or chlorosulfonic acid. Typical examples of monoglyceride (ether) sulfates suitable in the context of the invention are the reaction products of lauric acid monoglyceride, coconut fatty acid monoglyceride, palmitic acid monoglyceride, stearic acid monoglyceride, oleic acid monoglyceride and tallow fatty acid monoglyceride, and the ethylene oxide adducts thereof with sulfur trioxide or chlorosulfonic acid in the form of the sodium salts thereof.

The inventive mineral binder, synthetic resin render or paint may contain nonionic surfactants as surfactants or as emulsifiers. Typical examples of nonionic surfactants are alkoxylates of alkanols, endgroup-capped alkoxylates of alkanols with no free OH groups, alkoxylated fatty acid lower alkyl esters, hydroxy mixed ethers, alkylphenol polyglycol ethers, fatty acid polyglycol esters, fatty acid amide polyglycol ethers, fatty amine polyglycol ethers, alkoxylated triglycerides, mixed ethers or mixed formals, alk(en)yl oligoglycosides, fatty acid N-alkylglucamides, protein hydrolyzates (especially wheat-based vegetable products), polyol fatty acid esters, sugar esters, sorbitan esters, polysorbates and amine oxides. When the nonionic surfactants contain polyglycol ether chains, they may have a conventional, but preferably a narrowed, homolog distribution.

Suitable examples are the nonionic surfactants selected from the group formed by alkyl and/or alkenyl oligoglycosides, hydroxy mixed ethers, alkoxylates of alkanols, especially fatty alcohol polyethylene glycol/polypropylene glycol ethers (FAEO/PO) or fatty alcohol polypropylene glycol/polyethylene glycol ethers (FAPO/EO), endgroup-capped alkoxylates of alkanols, especially endgroup-capped fatty alcohol polyethylene glycol/polypropylene glycol ethers or endgroup-capped fatty alcohol polypropylene glycol/polyethylene glycol ethers, and fatty acid lower alkyl esters and amine oxides.

Likewise suitable are the alkyl and/or alkenyl oligoglycosides. The alkyl and/or alkenyl oligoglycosides may derive from aldoses or ketoses having 5 or 6 carbon atoms, preferably from glucose. The preferred alkyl and/or alkenyl oligoglycosides are therefore alkyl and/or alkenyl oligoglucosides. The degree of oligomerization p, i.e. the distribution of mono- and oligoglycosides, is, for example, between 1 and 10. While p in a given compound must always be an integer and here may in particular assume the values of p = 1 to 6, the value p for a particular alkyl oligoglycoside is an analytically determined theoretical parameter which is usually a fraction. Preference is given to using alkyl and/or alkenyl oligoglycosides with a mean degree of oligomerization p of 1.1 to 3.0. From a performance point of view, preference is given to those alkyl and/or alkenyl oligoglycosides with a degree of oligomerization less than 1.7 and especially between 1.2 and 1.4. The alkyl or alkenyl radical may derive from primary alcohols having 4 to 11 and preferably 8 to 10 carbon atoms. Typical examples are butanol, caproyl alcohol, caprylyl alcohol, capryl alcohol and undecyl alcohol, and the technical-grade mixtures thereof, as obtained, for example, in the hydrogenation of technical-grade fatty acid methyl esters or in the course of the hydrogenation of aldehydes from the Roelen oxo process. The alkyl or alkenyl radical may also derive from primary alcohols having 12 to 22 and preferably 12 to 14 carbon atoms. Typical examples are lauryl alcohol, myristyl alcohol, cetyl alcohol, palmoleyl alcohol, stearyl alcohol, isostearyl alcohol, oleyl alcohol, elaidyl alcohol, petroselinyl alcohol, arachyl alcohol, gadoleyl alcohol, behenyl alcohol, erucyl alcohol, brassidyl alcohol and the technical-grade mixtures thereof, which can be obtained as described above.

Further suitable constituents of the inventive mineral binder, synthetic resin render or paint are hydroxy mixed ethers, which derive, for example, from alkoxylates of monohydric aliphatic, saturated, straight-chain or branched alcohols having 4 to 18 carbon atoms. Examples of suitable straight-chain alcohols are butanol-1, caproyl alcohol, enanthyl alcohol, caprylyl alcohol, pelargonyl alcohol, capryl alcohol, undecanol-1, lauryl alcohol, tridecanol-1, myristyl alcohol, pentadecanol-1, palmityl alcohol, heptadecanol-1, stearyl alcohol, nonadecanol-1, arachidyl alcohol, heneicosanol-1, behenyl alcohol and the technical-grade mixtures thereof, as obtained in the high-pressure hydrogenation of technical-grade methyl esters based on fats and oils. Examples of such branched alcohols are what are known as the oxo process alcohols, which usually bear 2 to 4 methyl groups as branches and are prepared by the oxo process, and what are known as Guerbet alcohols which are 2-branched with an alkyl group. Suitable Guerbet alcohols are 2-ethylhexanol, 2-butyloctanol, 2-hexyldecanol and/or 2-octyldodecanol. The alcohols can be used, for example, in the form of their alkoxylates, which are prepared in a known manner by reacting the alcohols in any sequence with ethylene oxide, propylene oxide and/or butylene oxide.

Likewise suitable are fatty alcohol polyethylene glycol/polypropylene glycol ethers or fatty alcohol polypropylene glycol/polyethylene glycol ethers, which are optionally endgroup-capped. For example, the fatty alcohol radical is an aliphatic, saturated, straight-chain or branched alkyl radical having 8 to 16 carbon atoms. The fatty alcohol polyethylene glycol/polypropylene glycol ethers or fatty alcohol polypropylene glycol/polyethylene glycol ethers useable in accordance with the invention are, for example, addition products of 1 to 20 mol of ethylene oxide onto monofunctional alcohols. Suitable alcohols are the above-described alcohols such as fatty alcohols, oxo process alcohols and Guerbet alcohols. Among such alcohol ethoxylates, those which have a narrowed homolog distribution are likewise suitable. The endgroup-capped compounds are capped, for example, by an alkyl group having 1 to 8 carbon atoms. Frequently, such compounds are also referred to in the literature as mixed ethers. Suitable representatives are methyl group-capped compounds. Such compounds can be prepared easily by reacting the corresponding non-endgroup-capped fatty alcohol polyethylene glycol/polypropylene glycol ethers with methyl chloride in the presence of a base.

Likewise suitable as surfactants or emulsifiers in the context of the inventive mineral binder, synthetic resin render or paint are alkoxylated fatty acid lower alkyl esters. Typical examples are the formal insertion products of an average of 1 to 20 and preferably 5 to 10 mol of ethylene oxide and/or propylene oxide into the methyl, ethyl, propyl, isopropyl, butyl and tert-butyl esters of caproic acid, caprylic acid, 2-ethylhexanoic acid, capric acid, lauric acid, isotridecanoic acid, myristic acid, palmitic acid, palmoleic acid, stearic acid, isostearic acid, oleic acid, elaidic acid, petroselic acid, linoleic acid, linolenic acid, eleostearic acid, arachic acid, gadoleic acid, behenic acid and erucic acid, and the technical-grade mixtures thereof.

The products are typically prepared by inserting the alkoxides into the carbonyl ester bond in the presence of specific catalysts, for example calcined hydrotalcite. Particular preference is given to reaction products of an average of 5 to 10 mol of ethylene oxide into the ester bond of technical-grade coconut fatty acid methyl esters.

Likewise suitable as surfactants or emulsifiers in the context of the inventive compositions are amine oxides or alkylamidoamine oxides.

An inventive mineral binder, synthetic resin render or paint may additionally also comprise one or more cationic surfactants. Suitable cationic surfactants are especially those which contain a quaternary ammonium group. They may be cationic or amphoteric betaine surfactants. Suitable cationic surfactants contain amino groups or quaternized hydrophilic ammonium groups which, in solution, bear a positive charge and can be represented by the general formula N⁽⁺⁾R¹R²R³R⁴X⁽⁻⁾ where R¹ to R⁴ are each independently aliphatic groups, aromatic groups, alkoxy groups, polyoxyalkylene groups, alkylamido groups, hydroxyalkyl groups, aryl groups or alkaryl groups each having 1 to 22 carbon atoms, and X(-) is a cosmetically compatible anion selected from halogen, acetate, phosphate, nitrate or alkylsulfate, preferably a chloride.

In order to ensure the surfactant properties, at least one of the R¹ to R⁴ radicals has at least 8 carbon atoms. In addition to the carbon atoms and the hydrogen atoms, the aliphatic groups may also contain cross-bonds or other groups, for example further amino groups. Examples of suitable cationic surfactants are especially quaternary ammonium compounds, preference being given to ammonium halides, especially the chlorides or bromides thereof, such as alkyldimethylbenzylammonium salts, alkyltrimethylammonium salts, dialkyldimethylammonium chlorides and trialkylmethylammonium chlorides or the bromides thereof, for example cetyltrimethylammonium chloride or bromide, stearyltrimethylammonium chloride or bromide, distearyltrimethylammonium chloride or bromide, lauryldimethylbenzylammonium chloride or bromide, tetradecyltrimethylammonium chloride or bromide, alkyldimethylhydroxyethylammonium chloride or bromide, alkyltrimethylammonium chloride or bromide, dialkyldimethylammonium chloride or bromide, alkylpyridinium salts, for example lauryl- or cetylpyridinium chloride, alkylamidoethyltrimethylammonium ether sulfates, and compounds with cationic character, such as amine oxides, for example alkylmethylamine oxides or alkylaminoethyldimethylamine oxides.

In a preferred embodiment, the inventive compositions contain 0 to about 50% by weight, for example about 0 to about 50 or about 1 to about 30 or about 2 to about 25 or about 3 to about 22 or about 4 to about 20 or about 5 to about 15 or about 7 to about 13 or about 8 to about 12, for example about 9 to about 11 or about 10% by weight, of anionic, cationic or nonionic surfactants, or mixtures of two or more thereof, for example a mixture of one or more anionic surfactants and one or more nonionic surfactants or one or more cationic surfactants or one or more nonionic surfactants, calculated as active substance, based on the overall composition.

Preferred colloids are partly hydrolyzed and fully hydrolyzed polyvinyl alcohols; polyvinylpyrrolidones, polyvinyl acetals, polysaccharides in water-soluble form, such as starches (amylose and amylopectin), chemically and enzymatically modified starches, celluloses and the carboxymethyl, methyl, hydroxyethyl, hydroxypropyl derivatives thereof, proteins such as casein or caseinate, soy protein, gelatin, lignosulfonates, synthetic polymers such as poly(meth)acrylic acid, copolymers of (meth)acrylates with carboxyl-functional comonomer units, poly(meth)acrylamide, polyvinylsulfonic acids and the water-soluble copolymers thereof; melamine formaldehyde-sulfonates, naphthalene formaldehydesulfonates, styrene-maleic acid and vinyl ether-maleic acid copolymers. The proportion of colloids is preferably between 20 and 80 % by weight, especially between 50 and 60 % by weight. Preferably at least 2, 5 or 10 % by weight, and not more than 20, 50 or 80 % by weight of colloids is present.

The colloids used are preferably partly hydrolyzed or fully hydrolyzed polyvinyl alcohols with a degree of hydrolysis of 80 to 100 mol%, especially of 80 to 95 mol %, and a Hoppler viscosity (in 4 % aqueous solution) of 1 to 30 mPas, preferably 3 to 15 mPas (method according to Hoppler at 20°C, DIN 53015). Preference is also given to partly hydrolyzed or fully hydrolyzed, hydrophobically modified polyvinyl alcohols with a degree of hydrolysis of 80 to 100 mol % and a Hoppler viscosity in 4% aqueous solution of 1 to 30 mPas, preferably 3 to 15 mPas. Examples thereof are partly hydrolyzed copolymers of vinyl acetate with hydrophobic comonomers such as isopropenyl acetate, vinyl pivalate, vinyl ethylhexanoate, vinyl esters of saturated alpha-branched monocarboxylic acids having 5 to 11 carbon atoms, dialkyl maleates and dialkyl fumarates such as diisopropyl maleate and diisopropyl fumarate, vinyl chloride, vinyl alkyl ethers such as vinyl butyl ether, alpha-olefins having 2 to 12 carbon atoms, such as ethene, propene and decene. The proportion of the hydrophobic units is preferably 0.1 to 10% by weight, based on the total weight of the partly or fully hydrolyzed polyvinyl alcohol. Particular preference is given to partly hydrolyzed or fully hydrolyzed copolymers of vinyl acetate with isopropenyl acetate having a degree of hydrolysis of 95 to 100 mol %. It is also possible to use mixtures of the polyvinyl alcohols mentioned.

Particularly preferred polymers are those which are redispersible in water. Suitable polymers are those based on one or more monomers from the group comprising vinyl esters of unbranched or branched alkylcarboxylic acids having 1 to 15 carbon atoms, methacrylic esters and acrylic esters of alcohols having 1 to 15 carbon atoms, vinylaromatics, olefins, dienes and vinyl halides. Further suitable polymers are specified in WO 2004/103928 on pages 8 to 10, to which explicit reference is made here.

To increase the storability, an antiblocking agent (anticaking agent) can be added. Examples of antiblocking agents are calcium and magnesium carbonate, tallow, silica, kaolins, silicates, preferably with particle sizes in the range between 10 nm and 100 µm. The proportion of the antiblocking agents in the inventive compositions is, in preferred embodiments, between 0.5 and 30 % and especially between 1 and 20 % by weight. Preferably up to 5, 10 or 20 % by weight of antiblocking agent is present.

Fillers preferred in accordance with the invention are mineral or inorganic fillers, for example clays, sand, grit, slag, glass, silica gels, sulfates, oxides, glass and mineral fibers, polymer fibers, hollow microspheres, light organic fillers (for example polystyrene foam), paper powder, wood shavings and cellulose fibers. The fillers may be part of the inventive mineral binder, synthetic resin render or paint.

Further additives used may, for example, be organo(poly)siloxanes. Corresponding materials are disclosed in DE 601 08 152 T2, especially in paragraphs [0015] to [0017], to which explicit reference is made here.

Viscosity improvers serve, for example, to alter the flow properties or the processability of a mineral binder, synthetic resin render or paint. Additives which alter the flow behavior of the render are also referred to as rheology-altering additives.

The pigments used may, for example, be titanium dioxide, zinc oxide or zinc sulfide.

For example polyhydric alcohols can be comprised. Polyhydric alcohols refer to compounds which have at least 2 OH groups. In principle, linear, branched, saturated or unsaturated and homocyclic or heterocyclic unsaturated alcohols are suitable as a constituent of the mineral binder. However, it has been found to be advantageous in some cases when the polyhydric alcohols used are compounds which have only carbon, hydrogen and oxygen as atomic constituents. The molar mass of corresponding polyhydric alcohols may be between about 62 (ethylene glycol) and several thousand, for example about 100 000. An inventive mineral binder may contain, for example, only one polyhydric alcohol or two or more polyhydric alcohols. The alcohols may differ, for example, in their molar masses or in the number of the OH groups or in several different features. Suitable examples are polyhydric alcohols such as ethylene glycol, propylene glycol, butylene glycol, pentylene glycol, hexylene glycol, propanetriol, trimethylolpropane, pentaerythritol, dihydroxycyclohexane, diethylene glycol, triethylene glycol and the dimeric, trimeric or oligomeric derivatives of the abovementioned dialcohols, oligoglycerol, polyglycerol, polyvinyl alcohol and the like. It may be preferred in accordance with the invention when a mineral binder contains a low molecular weight polyhydric alcohol having 2, 3 or 4 OH groups, especially propanetriol. The proportion of polyhydric alcohol or polyhydric alcohols is, when these compounds are present in the inventive mineral binder, synthetic resin render or paint, up to about 40% by weight, especially about 1 to about 30 or about 5 to about 20 or about 8 to about 13% by weight.

An inventive mineral binder, synthetic resin render or paint may further comprise one or more monoalcohols, for example fatty alcohols. Suitable alcohols here are linear or branched, saturated or unsaturated aliphatic, monofunctional alcohols, especially methanol, ethanol, the isomers of propanol, of butanol or of hexanol, and fatty alcohols having about 8 to about 22 carbon atoms, for example octanol, decanol, dodecanol, tetradecanol, hexadecanol or octadecanol be used. The fatty alcohols mentioned are obtainable, for example, by reduction of natural fatty acids and can be used either as pure substances or in the form of the technical-grade mixtures thereof. Very suitable examples are linear monoalcohols and especially those having about 4 to about 18 carbon atoms. Instead of the linear or branched aliphatic alcohols or in a blend therewith, monoalkyl polyether alcohols of different molecular weight are also useable, preferably in the molecular weight ranges of about 1000 to about 2000 g/mol.

In the mineral binder, synthetic resin render or paint, the proportion of carboxylic acid salts of carboxylic acids having 8 to 17 carbon atoms, based on the total amount of carboxylic acid salts in the mineral binder, synthetic resin render or paint, preferably amounts to 20 % by weight or more than 20 % by weight, for example at least 30 % by weight, or at least 40 % by weight, more preferably at least 50 % by weight.

In the mineral binder, the proportion of carboxylic acids 8 to 17 carbon atoms, based on the total amount of carboxylic acids in the mineral binder, synthetic resin render or paint, preferably amounts to 20 % by weight or more than 20 % by weight, for example at least 30 % by weight, or at least 40 % by weight, more preferably at least 50 % by weight.

In the mineral binder, synthetic resin render or paint, the carboxylic acid salt which amounts to the greatest proportion in percent by weight of all of the carboxylic acid salts is preferably a salt of a carboxylic acid having 8 to 17 carbon atoms, more preferably 10 to 16 carbon atoms, even more preferably 12 to 14 carbon atoms, or the carboxylic acid which amounts to the greatest proportion in percent by weight of all of the carboxylic acids is a carboxylic acid having 8 to 17 carbon atoms, more preferably 10 to 16 carbon atoms, even more preferably 12 to 14 carbon atoms.

In the mineral binder, synthetic resin render or paint, the average chain length of all of the carboxylic acid salts or of all of the carboxylic acids in the mineral binder, synthetic resin render or paint is within a range from 12 to 16 carbon atoms, more preferably from 12 to 14 carbon atoms.

In the mineral binder, synthetic resin render or paint, the sum of the proportions of the salts of carboxylic acids with more than 16 carbon atoms in all of the carboxylic acid salts amounts to less than 50 % by weight, or the sum of the proportions of the carboxylic acids with more than 16 carbon atoms in all of the carboxylic acids amounts to less than 50 % by weight, or both.

Preferred mineral binders according to the present invention comprise
15 to 80 % of a mineral binder material, preferably 20 to 80 %, more preferably 25 to 70 %,
0.01 to 2 % of the hydrophobic additive according to the invention,
0 to 75 % of fillers, preferably 15 to 70 %,
0 to 30 % of binders, preferably 0.1 to 25 %, more preferably 0.1 to 5 %, even more preferably 0.1 to 1 %,
0 to 25 % of at least one dispersant, emulsifier, or surfactant, preferably 0.5 to 20 %, more preferably 0.5 to 5 %,
0 to 25 % of colloids, preferably 0.5 to 20 %, and
0 to 30 % of further additives.

For example, mineral binders according to the present invention comprise
45 to 80 % of a mineral binder material,
0.01 to 2 % of the hydrophobic additive according to the invention,
0.1 to 0.4 % of a binder, preferably a water-soluble or water-dispersible binder,
0.5 to 5 % of at least one dispersant, emulsifier, or surfactant,
0.1 to 1.5 % of a processing aid, and
optionally, further additives (e.g., solubilizers, further hydrophobing agents, viscosity improvers, pigments, dyes, preservatives, gelating agents, antiblocking agents, pH modifiers, buffers, reaction accelerants, reaction retardants, air entrainers).

For example, mineral binders according to the present invention comprise
35 to 45 % of a mineral binder material,
0.01 to 2 % of the hydrophobic additive according to the invention,
45 to 60 % of fillers,
0.3 to 1 % of a binder, preferably a water-soluble or water-dispersible binder,
0.5 to 2 % of colloids,
1 to 2 % of at least one dispersant, emulsifier, or surfactant, and
optionally, further additives (e.g., solubilizers, further hydrophobing agents, viscosity improvers, pigments, dyes, preservatives, gelating agents, anticaking agents, pH modifiers, buffers, reaction accelerants, reaction retardants, air entrainers).

For example, mineral binders according to the present invention comprise
25 to 65 % of a mineral binder material,
0.01 to 2 % of the hydrophobic additive according to the invention,
30 to 70 % of fillers,
0.3 to 1 % of a binder, preferably a water-soluble or water-dispersible binder,
0.5 to 2 % of colloids,
3 to 5 % of at least one dispersant, emulsifier, or surfactant,
0 to 1.5 % of an antiblocking agent, and
optionally, further additives (e.g., solubilizers, further hydrophobing agents, viscosity improvers, pigments, dyes, preservatives, gelating agents, anticaking agents, pH modifiers, buffers, reaction accelerants, reaction retardants, air entrainers).

For example, mineral binders according to the present invention comprise
15 to 40 % of a mineral binder material,
0.01 to 2 % of the hydrophobic additive according to the invention,
15 to 25 % of fillers,
15 to 25 % of a binder, preferably a water-soluble or water-dispersible binder,
10 to 20 % of colloids,
5 to 20 % of at least one dispersant, emulsifier, or surfactant,
0 to 15 % of a hydrophobing agent, and
optionally, further additives (e.g., solubilizers, further hydrophobing agents, viscosity improvers, pigments, dyes, preservatives, gelating agents, anticaking agents, pH modifiers, buffers, reaction accelerants, reaction retardants, air entrainers).

Synthetic resin renders preferably comprise
20-30 wt.-% of a binder dispersion
20-35 wt.-% quartz grains,
25-40 wt.-% of one or more additives, and
10-25 wt.-% water.

Paints, in particular dispersion paints, preferably comprise
1-15 wt.-% pigments,
30-60 wt.-% fillers,
1-25 wt.-% polymeric binder,
0,1-3,5 wt.-% of the hydrophobic additive according to the invention,
25-70 wt.-% water, wherein the pH is in the range of from 10 to 12,
the percentages based on the total weight of the paint.

According to the present invention, it is preferred that the mineral binder prepared according to EN 1015-18 has a water uptake (W-value, 24h) measured according to EN 1015-18 of 12 % or less, preferably of 10 % or less, more preferably of 8 % or less or 5 % or less.

### Process for the preparation of a hydrophobic additive

The present invention relates to a process for the preparation of a hydrophobic additive according to the invention. In view of the process described below, preferred inorganic carrier particles, metal oxides, metal hydroxides and metal carbonates are as described above with regard to "component a."; preferred salts of carboxylic acids and carboxylic acids are as described above with regard to "component b.".
a. The process may comprise the mixing and reaction of one or more inorganic carrier particles selected from the group consisting of a reactive metal oxide or metal hydroxide or metal carbonate are reacted with one or more carboxylic acids under formation of one or more metal salts of one or more carboxylic acids as a product. It may be preferred that the reaction is carried out at a temperature of more than ambient temperature, preferably more than 50°C, more preferably at 80°C to 160°C.
b. The process may comprise the mixing of one or more inorganic carrier particles with one or more carboxylic acids at a temperature of 10°C or more, e.g., at 15°C or more or at 20°C or more or at 25°C or more, preferably at 60 to 140°C.
c. The process may comprise the mixing of one or more inorganic carrier particles with one or more carboxylic acids at a temperature of more than ambient temperature under formation of a product, preferably at a temperature of more than 50°C, more preferably 60 to 140°C.
d. The process may comprise the mixing of one or more inorganic carrier particles with one or more salts of one or more carboxylic acids and one or more carboxylic acids at a temperature of 60°C or more than 60°C under formation of a product, preferably at a temperature of from 60 to 140°C.
e. The process may comprise the mixing of one or more inorganic carrier particles selected from the group consisting of a reactive metal oxide or metal hydroxide with a triglyceride, preferably a natural, partially hydrogenated or fully hydrogenated fat or oil, preferably selected from the group consisting of cocos oil and palm kernel oil, under formation of one or more fatty acid metal salts as a product.

The process further comprises milling the product formed by one of the options described above to a particle size distribution D90 in a range from 8 to 150 µm if the particle size distribution of the product is outside this range.

It may be preferred that the carboxylic acids, salts of carboxylic acids, or both, are added to the inorganic carrier particles in liquid form, dissolved in a solvent or suspended in a liquid suspension medium.

It may be preferred that the carboxylic acids, salts of carboxylic acids, or both, are added to the inorganic carrier particles in liquid form, dissolved in a solvent or suspended in a liquid suspension medium, and the solvent or suspension medium can be removed prior to milling.

Milling is carried out in mills, preferably in batch mills, three roll mills, ore mills, centrifugal mills, fluidized bed jet mills, rock mills, hammer mills, coal mills, edge mills, ball mills, knife mills, mortar grinders, nano mills, bead mills, impact mills, tube mills, rotor mills, conical bead mills, disc mills, beater mills, cutting mills, gravity mills, pin mills, jet mills, top mills, tumbling mills, vertical mills, roller mills, or circulation mills.

For making a mineral binder according to the present invention, the mineral binder material can be mixed with the hydrophobic additive and, optionally, further additives to obtain a mineral binder. It is also possible to prepare an intermediate compound of the hydrophobic additive and at least one further additive, and subsequently mix the intermediate compound with the mineral binder material and, optionally, further additives to obtain a mineral binder. It is also possible, to prepare an intermediate compound of the hydrophobic additive and further additives, and subsequently mix the intermediate compound with the mineral binder material to obtain a mineral binder, wherein all additives comprised in the mineral binder are also comprised in the intermediate compound.

### Intermediate compound

Thus, the present invention further relates to an intermediate product comprising 0.1 to 90 % by weight of a hydrophobic additive according to the invention, and 10 to 99.9 % of one or more additives selected from solvents, solubilizers, fillers, further hydrophobing agents, binders, surfactants, emulsifiers, viscosity improvers, surfactants, pigments, dyes, preservatives, gelating agents, anticaking agents, pH modifiers, buffers, reaction accelerants, reaction retardants, colloids, aerating agents, dispersible polymer powders, water retainers, and combinations of two or more thereof.

Examples and preferences disclosed in view of the mineral binder for solvents, solubilizers, fillers, further hydrophobing agents, binders, surfactants, emulsifiers, viscosity improvers, surfactants, pigments, dyes, preservatives, gelating agents, anticaking agents, pH modifiers, buffers, reaction accelerants, reaction retardants, colloids, aerating agents, dispersible polymer powders, water retainers apply also as examples and preferences in view of the intermediate compound.

In general, the intermediate compound can be obtained by any method resulting in the intermediate compound according to the present invention. For example, the intermediate can be obtained by preparing a hydrophobic additive as described above, and mixing said hydrophobic additive with one or more additives in a ratio of from 0.1:99.9 to 90:10.

### Use of a hydrophobic additive

The present invention also relates to the use of the hydrophobic additive according to the present invention or of an intermediate compound according to the present invention for improving the hydrophobicity of a mineral binder.

### PREFERRED EMBODIMENTS OF THE INVENTION

A. Hydrophobic additive comprising a mixture of
   a. one or more inorganic carrier particles and
   b. one or more salts of one or more carboxylic acids or one or more carboxylic acids or in the alternative both of one or more salts of one or more carboxylic acids and one or more carboxylic acids,
   wherein the particle size distribution (psd) D90 of the mixture as powder measured with a Malvern Mastersizer 2000 is from 8 to 150 µm.
B. Hydrophobic additive according to embodiment A, wherein the inorganic carrier particles are selected from metal oxides, metal hydroxides, metal carbonates, metal silicates, metal phosphates, metal sulfates, or mixtures of two or more thereof, the metal or metals being selected from metals with a valence of 1, 2, 3 or 4, preferably 1 or 2.
C. Hydrophobic additive according to any of the preceding embodiments, characterized in that the inorganic carrier particles are selected from oxides, hydroxides, carbonates, silicates, phosphates, and sulfates, of Li, Na, K, Ca, Mg, Ba, Zn, Al, Ti, Si or mixtures of two or more thereof.
D. Hydrophobic additive according to any of the preceding embodiments, characterized in that the salts of one or more carboxylic acids comprise a salt of a carboxylic acid with 6 to 14 C-atoms or a mixture of two or more salts of carboxylic acids with 6 to 14 C-atoms, the carboxylic acid salts preferably being selected from salts of caprylic acid, pelargonic acid, capric acid, lauric acid, myristic acid and undecylenic acid or the one or more carboxylic acids comprise a carboxylic acid with 6 to 14 C-atoms or a mixture of two or more carboxylic acids with 6 to 14 C-atoms, the carboxylic acids preferably being selected from salts of caprylic acid, pelargonic acid, capric acid, lauric acid, myristic acid and undecylenic acid, or both.
E. Hydrophobic additive according to any of the preceding embodiments, characterized in that the salts of one or more carboxylic acids comprise one or more salts of carboxylic acids with 10 to 16 C-atoms in an amount of at least 50 % by weight, or the one or more carboxylic acids comprise one or more carboxylic acids with 10 to 16 C-atoms in an amount of at least 50 % by weight, or both.
F. Hydrophobic additive according to any of the preceding embodiments, characterized in that the salts of one or more carboxylic acids comprise one or more salts of carboxylic acids with 12 to 14 C-atoms in an amount of at least 50 % by weight, or the one or more carboxylic acids comprise one or more carboxylic acids with 12 to 14 C-atoms in an amount of at least 50 % by weight, or both.
G. Hydrophobic additive according to any of the preceding embodiments, characterized in that the amount of salts of one or more carboxylic acids or the amount of one or more carboxylic acids or the amount of a mixture of one or more salts of one or more carboxylic acids and one or more carboxylic acids in the mixture is from 3 to 35 % by weight.
H. Hydrophobic additive according to any of the preceding embodiments, characterized in that it comprises 65 to 97 % by weight of inorganic carrier particles and 3 to 35% by weight of one or more salts of one or more carboxylic acids or one or more carboxylic acids or both.
I. Hydrophobic additive according to any of the preceding embodiments, characterized in that it comprises one or more further components selected from soaps, preferably alkali soaps, silicon-containing compounds, fluorohydrocarbons, mineral oils and natural oils.
J. Hydrophobic additive according to any of the preceding embodiments, characterized in that it is obtained by
   a) reaction of one or more inorganic carrier particles selected from the group consisting of a reactive metal oxide or metal hydroxide or metal carbonate with one or more carboxylic acids under formation of one or more metal salts of one or more carboxylic acids as a product, and milling the product to a particle size distribution D90 in a range from 8 to 150 µm if the particle size distribution of the product is outside this range, or
   b) mixing one or more inorganic carrier particles with one or more salts of one or more carboxylic acids at a temperature of 60°C or more than 60°C under formation of a product, and milling the product to a particle size distribution D90 in a range from 8 to 150 µm if the particle size distribution of the product is outside this range, or
   c) mixing one or more inorganic carrier particles with one or more carboxylic acids at a temperature of more than 10°C under formation of a product, and milling the product to a particle size distribution D90 in a range from 8 to 150 µm if the particle size distribution of the product is outside this range, or
   d) mixing one or more inorganic carrier particles with one or more salts of one or more carboxylic acids and one or more carboxylic acids at a temperature of 60°C or more than 60°C under formation of a product, and milling the product to a particle size distribution D90 in a range from 8 to 150 µm if the particle size distribution of the product is outside this range, or
   e) reaction of one or more inorganic carrier particles selected from the group consisting of a reactive metal oxide or metal hydroxide with a triglyceride, preferably a natural, partially hydrogenated or fully hydrogenated fat or oil, preferably selected from the group consisting of cocos oil and palm kernel oil, under formation of one or more fatty acid metal salts as a product, and milling the product to a particle size distribution D90 in a range from 8 to 150 µm if the particle size distribution of the product is outside this range,
   wherein the product is milled with a Malvern Mastersizer 2000 to have said particle size distribution (psd) D90 measured as powder.
K. Mineral binder, synthetic resin render or paint, comprising a hydrophobic additive according to any of embodiments A to J.
L. Mineral binder, synthetic resin render or paint according to embodiment K, characterized in that it contains at least one additive selected from antiblocking agents, solvents, binders, polymers, colloids, surfactants, dispersants or emulsifiers, or a mixture of two or more thereof.
M. Mineral binder, synthetic resin render or paint according to embodiments K or L, characterized in that the hydrophobic additive is contained in an amount of 0.01 to 2 % by weight, preferably in an amount of from 0.04 to 0.7 % by weight, based on the total weight of the mineral binder.
N. Mineral binder, synthetic resin render or paint according to any of embodiments K to M, characterized in that the proportion of carboxylic acid salts of carboxylic acids having 8 to 17 carbon atoms, based on the total amount of carboxylic acid salts in the mineral binder, amounts to 20 % by weight or more than 20 % by weight.
O. Mineral binder, synthetic resin render or paint according to any of embodiments K to N, characterized in that the proportion of carboxylic acids 8 to 17 carbon atoms, based on the total amount of carboxylic acids in the mineral binder, amounts to 20 % by weight or more than 20 % by weight.
P. Mineral binder, synthetic resin render or paint according to any of embodiments K to O, characterized in that the carboxylic acid salt which amounts to the greatest proportion in percent by weight of all of the carboxylic acid salts is a salt of a carboxylic acid having 8 to 17 carbon atoms, or the carboxylic acid which amounts to the greatest proportion in percent by weight of all of the carboxylic acids is a carboxylic acid having 8 to 17 carbon atoms.
Q. Mineral binder, synthetic resin render or paint according to any of embodiments K to P, characterized in that the average chain length of all of the carboxylic acid salts or of all of the carboxylic acids in the mineral binder is within a range from 12 to 16 carbon atoms.
R. Mineral binder, synthetic resin render or paint according to any of embodiments K to Q, characterized in that the sum of the proportions of the salts of carboxylic acids with more than 16 carbon atoms in all of the carboxylic acid salts amounts to less than 50 % by weight, or the sum of the proportions of the carboxylic acids with more than 16 carbon atoms in all of the carboxylic acids amounts to less than 50% by weight, or both.
S. Mineral binder according to any of embodiments K to R, characterized in that it comprises
   15 to 80 % of a mineral binder material,
   0.01 to 2 % of the hydrophobic additive according to any of embodiments A to J,
   0 to 75 % of fillers,
   0 to 30 % of binders,
   0 to 25 % of at least one dispersant, emulsifier, surfactant or a combination of two or more thereof,
   0 to 25 % of colloids, and
   0 to 30 % of further additives.
T. Mineral binder according to any of embodiments K to S, characterized in that the mineral binder prepared according to EN 1015-18 has a water uptake (W-value, 24 h) measured according to EN 1015-18 of 12 % or less, preferably of 10 % or less, more preferably of 8 % or less or 5 % or less.
U. Process for the preparation of a hydrophobic additive according to any of embodiments A to I, wherein the process comprises
   i. one or more inorganic carrier particles selected from the group consisting of a reactive metal oxide or metal hydroxide or metal carbonate are mixed and reacted with one or more carboxylic acids under formation of one or more metal salts of one or more carboxylic acids as a product, or
   ii. one or more inorganic carrier particles are mixed with one or more salts of one or more carboxylic acids at a temperature of 60°C or more than 60°C under formation of a product, or
   iii. one or more inorganic carrier particles are mixed with one or more carboxylic acids at a temperature of 10°C or more, or 15°C or more, or 20°C or more or 25°C or more under formation of a product, or
   iv. one or more inorganic carrier particles are mixed with one or more salts of one or more carboxylic acids and one or more carboxylic acids at a temperature of 60°C or more than 60°C under formation of a product, or
   v. reaction of one or more inorganic carrier particles selected from the group consisting of a reactive metal oxide or metal hydroxide with a triglyceride, preferably a natural, partially hydrogenated or fully hydrogenated fat or oil, preferably selected from the group consisting of cocos oil and palm kernel oil, under formation of one or more fatty acid metal salts as a product,
   and milling the product to a particle size distribution D90 in a range from 8 to 150 µm if the particle size distribution of the product is outside this range, wherein the product is milled with a Malvern Mastersizer 2000 to have said particle size distribution (psd) D90 measured as powder.
V. Process according to embodiment U, wherein
   the reaction according to a. is carried out at a temperature of more than ambient temperature, preferably more than 50°C, more preferably at 80°C to 160°C, or
   the mixing according to b. is carried out at a temperature of from 60 to 140°C, or
   the mixing according to c. is carried out at a temperature of 10°C or more, or 15°C or more, or 20°C or more or 25°C or more, more preferably at 60 to 140°C, or
   the mixing according to d. is carried out at a temperature of from 60 to 140°C,or
   the fat or oil in step e. is selected from the group consisting of cocos oil and palm kernel oil.
W. Process according to any one of embodiments U or V, wherein the carboxylic acids, salts of carboxylic acids, or both, are added to the inorganic carrier particles in liquid form, dissolved in a solvent or suspended in a liquid suspension medium, and the solvent or suspension medium can be removed prior to milling.
X. Intermediate compound comprising 0.1 to 90% by weight of a hydrophobic additive according to any of embodiments A to J, and 10 to 99.9% of one or more additives selected from solvents, solubilizers, fillers, further hydrophobing agents, binders, surfactants, emulsifiers, viscosity improvers, surfactants, pigments, dyes, preservatives, gelating agents, anticaking agents, pH modifiers, buffers, reaction accelerants, reaction retardants, colloids, aerating agents, dispersible polymer powders, water retainers, and combinations of two or more thereof.
Y. Use of a hydrophobic additive according to any of embodiments A to J or of an intermediate compound according to embodiment X, for improving the hydrophobicity of a mineral binder.

### EXAMPLES

### Methods

### Particle size distribution D90

The particle size distribution D90 is determined using a Malvern Mastersizer 2000 which is based on laser diffraction measurement.

### W-value

The hydrophobicity is determined by the water-uptake (W-value) measured according to EN 1015-18, however, the sample was stored in water for 24h. The sample is prepared in accordance with EN 1015-18.

A sample of a mineral binder (e.g., a lime-cement plaster) is prepared and conditioned according to EN 1015-18, and subsequently immersed in water for 24 h.

A desired W-value (24 h) is less than 5 %. To provide a qualified evaluation, all samples comprise the same amount of hydrophobic additive, namely 0.25 %. The W-value (24 h) of lime-cement mortar without hydrophobing agent is 16 %.

### General procedure for preparing a hydrophobic additive

Unless otherwise stated below, the hydrophobic additive is prepared by adding the inorganic carrier particles to the carboxylic acid (metal salt) in a reactor (RoboCook) which is equipped with heating and with rotating blades as an agitating unit. The reaction time is 40 min. The reaction temperature is 140°C. The products are milled under equal conditions in a Fritzsch Pulverisette 14.

### Mineral binders

### Example B1: Render

| | |
|---|---|
| Calcium carbonate from marble (up to 4 mm) | 40.0 - 90.0 % |
| White Portland cement | 5.0 - 17.0 % |
| Calcium hydroxide | 1.0 - 15.0 % |
| Dispersion powder | 0.5 - 5.0 % |
| Mica | 0.1 - 6.0 % |
| Methyl cellulose | 0.1 - 0.4 % |
| Processing aid (fibrous cellulose) | 0.1 - 1.5 % |

### Example B2: Tile cement compositions B2a and B2b

| | **B2a** | **B2b** |
|---|---|---|
| Cement (OPZ OEM I 52,5 R) | 40 % | 40 % |
| Quartz sand (0.1 to 0.3 mm) | 40 % | 41 % |
| Calcit (60 µm) | 16 % | 16 % |
| Dispersion powder (50E100) | 1.5 % | 1.5 % |
| Cellulose ether (10,000-20,000 mPas) | 0.5 % | 0.5 % |
| Cellulose fibers (fiber length: 250 µm) | 1 % | 1 % |
| Zeolite (type 4A) | 1 % | |

### Example B3: Cement compositions B3a, B3b and B3c

| | **B3a** | **B3b** | **B3c** |
|---|---|---|---|
| Cement (OPZ OEM I 52,5 R) | 25 % | 40 % | 62 % |
| Quartz sand | 50 % | 53 % | |
| Powdered limestone | 6.0 % | | 8.0 % |
| Ground granulated blast funace slag | 13.0 % | | 3.0 % |
| Dispersion powder (50E100) | 4.0 % | 3.5 % | 3.5 % |
| Cellulose ether | 0.5 % | 0.5 % | 0.5 % |
| Cellulose fibers | 1.0 % | 1.0 % | 1.0 % |
| Calcium formiate | 0.5 % | 1.0 % | 1.0 % |
| Light filler (foamed post-consumer recycled glass, Poraver 0.1-0.3 mm) | | | 20 % |
| Metakaolin | | 1.0 % | 1.0 % |

### Example B4: Mortar for interior plaster

| | |
|---|---|
| Hydraulic binder | 6.4 - 7.4 % |
| Ground limestone (up to 0.5 mm) | 21-37 % |
| Expanded perlite (up to 0.5 mm, 60-90 kg/m³) | 18.5-21 % |
| Methyl cellulose | 13.9-17 % |
| Melamin resin (Melment F10) | 13.9-17 % |
| Sodium laurylsulfate | 9.3-17 % |
| Potassium carbonate | 0.1-0.05 % |

### Example B4: Mortar for exterior plaster

| | |
|---|---|
| Hydraulic binder | 5.6-6.8 % |
| Ground limestone (up to 0.5 mm) | 19-34 % |
| Expanded perlite (up to 0.5 mm, 60-90 kg/m³) | 17-19 % |
| Methyl cellulose | 12.7-15 % |
| Melamin resin (Melment F10) | 12.7-15 % |
| Sodium laurylsulfate | 8.5-15 % |
| Potassium carbonate | 0.05-0.3 % |
| Zinc stearate | 8.5-11 % |

To each of the above exemplary mineral binders 0.01 to 2 % by weight, based on the total amount of the mineral binder, of hydrophobic additive is added to provide mineral binders according to the present invention.

### Results of D90 and W-value determination

The following results are obtained for commercially available lime-cement plaster KZP65 (Baumit, Wopfing, Austria) with 0.25 % of hydrophobing agent according to the invention being added.

### 1. Comparative examples

In these examples, a carboxylic acid salt is used as the hydrophobing agent, i.e., no mixture with a carrier is used. Example 0 is the lime-cement plaster without hydrophobing agent.

| | Carboxylic acid | Carboxylic acid salt | Inorganic carrier particle | D90 [µm] | W-value [%] (24h-Value) |
|---|---|---|---|---|---|
| 0 | | | | | 16 |
| 1 | | Mg-stearate | | 45 | 5.95 |
| 2 | | Mg-cocoate | | 600 | 6.22 |
| 3 | | Mg-cocoate | | 60 | 3.04 |

It is shown that carboxylic acid metal salts with a high amount of short chain carboxylic acids, i.e., with a chain length of 14 carbon atoms or less, provides improved hydrophobicity when compared to long chain carboxylic acid metal salts, e.g., with a chain length of 18 carbon atoms.

### 2. Influence of inorganic carrier particle on the W-value

| | Carboxylic acid (salt) | Amount of Carboxylic acid (salt) [%] | Inorganic carrier particle | D90 [µm] | W-value [%] (24h-Value) |
|---|---|---|---|---|---|
| 4 | Coconut acid | 16.8 | MgO | 27 | 6.39 |
| 5 | Coconut acid | 16.8 | MgO | 53 | 8.85 |
| 6 | Coconut acid | 16.8 | Mg(OH)₂ | 16.5 | 2.8 |

Prior to reaction, the magnesium oxide particles used herein have a particle size distribution D90 of 13 µm. Prior to reaction, the magnesium hydroxide particles used herein have a particle size distribution D90 of 17 µm.

For the hydrophobic additive according to examples 4-6, the reaction is carried out at 140°C, i.e., the coconut acid is in molten state (melt process).

The D90 values of the hydrophobic additive with MgO carrier particles is considerably higher that the D90 values of the hydrophobic additive with Mg(OH)₂ carrier particles. In accordance, the W-values of the lime-cement plaster comprising the hydrophobic additive with MgO carrier particles is also higher.

### 3. Influence of the preparation process on the W-value

| | Carboxylic acid (salt) | Amount of Carboxylic acid (salt) [%] | Inorganic carrier particle | D90 [µm] | W-value [%] (24h-Value) |
|---|---|---|---|---|---|
| 6 | Coconut acid | 16.8 | Mg(OH)₂ | 16.5 | 2.8 |
| 7 | Coconut acid | 16.8 | Mg(OH)₂ | 57 | 9.95 |
| | | | | D50: 9 µm | |
| 8 | Coconut acid | 16.8 | Mg(OH)₂ | 16.5 | 4.27 |
| 9 | Coconut acid | 5 | Mg(OH)₂ | 14.9 | 9.5 |

For the hydrophobic additive according to examples 4-6, the reaction is carried out at 140°C, i.e., the coconut acid is in molten state (melt product).

For the hydrophobic additive according to example 7, the reaction is carried out at 80°C, in the presence of 80 % of water, the hydrophobic additive is precipitated, filtered, dried and milled. The resulting hydrophobic additive has a trimodal partice size distribution (1 µm, 9 µm (primary particles), and about 100 µm agglomerates).

For the hydrophobic additive according to examples 8 and 9, the molten coconut acid is added to magnesium hydroxide at ambient temperature. Thus, examples 7-9 represent physically coated products.

It is shown that the physically coated products of examples 7, 8 and 9 provide a considerably higher W-value than the melt product of example 6. In view of examples 8 and 9, it is clear that the W-value is not only influenced by the particle size of the hydrophobic additive, but that the preparation process of the hydrophobic additive also has an influence on the W-value.

| | Carboxylic acid (salt) | Amount of Carboxylic acid (salt) [%] | Inorganic carrier particle | D90 [µm] | W-value [%] (24h-Value) |
|---|---|---|---|---|---|
| 10 | Mg-cocoate | 16.8 | Mg(OH)₂ | 28 | 7.47 |
| 11 | Mg-cocoate | 5 | Mg(OH)₂ | 16 | 13.7 |
| 12 | Mg-stearate | 16.8 | Mg(OH)₂ | 25 | 11.89 |

The magnesium salt is mixed with the magnesium hydroxide at 80°C (examples 10 and 12) and ambient temperature (example 11), resulting in a physically coated product.

### 4. Influence of the concentration on the W-value

| | Carboxylic acid (salt) | Amount of Carboxylic acid (salt) [%] | Inorganic carrier particle | D90 [µm] | W-value [%] (24h-Value) |
|---|---|---|---|---|---|
| 13 | Coconut acid | 5 | Mg(OH)₂ | 16 | 11.32 |
| 14 | Coconut acid | 8 | Mg(OH)₂ | 16 | 9.1 |
| 15 | Coconut acid | 13 | Mg(OH)₂ | 22 | 7.58 |
| 16 | Coconut acid | 16.8 | Mg(OH)₂ | 16.5 | 2.8 |
| 17 | Coconut acid | 20 | Mg(OH)₂ | 55 | 4.02 |
| 18 | Coconut acid | 25 | Mg(OH)₂ | 35 | 3.39 |
| 19 | Coconut acid | 30 | Mg(OH)₂ | 75 | 4.06 |

It is shown that very high and very low amounts of carboxylic acid provide high W-values.

### 5. Influence of the chain length of the carboxylic acid on the W-value

| | Carboxylic acid (salt) | Amount of Carboxylic acid (salt) [%] | Inorganic carrier particle | D90 [µm] | W-value [%] (24h-Value) |
|---|---|---|---|---|---|
| 16 | Coconut acid | 16.8 | Mg(OH)₂ | 16.5 | 2.8 |
| 20 | Stearic acid | 16.8 | Mg(OH)₂ | 65 | 11.84 |

The use of carboxylic acids with high chain length (e.g., C18 for stearic acid) leads to higher W-values than the use of carboxylic acids with a shorter chain length proportion (e.g., about 50 % C12 in coconut acid).

### 6. Hybrids

| | Carboxylic acid (salt) | Amount of Carboxylic acid (salt) [%] | Inorganic carrier particle | Additional soap | D90 [µm] | W-value [%] (24h-Value) |
|---|---|---|---|---|---|---|
| 21 | Coconut acid | 16.8 | Mg(OH)₂ | Na-cocoate 10 % | 22 | 1.59 |
| 22 | Coconut acid | 16.8 | Mg(OH)₂ | K-cocoate 10% | 79 | 5.5 |
| 23 | Coconut acid | 16.8 | Mg(OH)₂ | K-cocoate 1 % (40 % in Wasser) | 38,7 | 4.4 |
| 24 | Coconut acid | 16.8 | Mg(OH)₂ | K-cocoate 10 % (40 % in Wasser) | 45,7 | 3.5 |

The hybrid according to example 21 is a mixture of two powders (the hydrophobic additive and the sodium cocoate).

For the hybrid of example 22, the hydrophobic additive is integrated into the potassium cocoate by mixing the magnesium hydroxide with the coconut acid and a 40 % potassium cocoate solution at 140°C.

For the hybrid of examples 23 and 24, the potassium cocoate is dissolved in 40 % of water. The solution is applied to form a film onto the hydrophobic additive after evaporation of water.

### 7. Other carriers

| | Carboxylic acid (salt) | Amount of Carboxylic acid (salt) [%] | Inorganic carrier particle | D90 [µm] | W-value [%] (24h-Value) |
|---|---|---|---|---|---|
| 25 | Na-cocoate | 16.8 | Silicate | 34 | 3.84 |
| 26 | Coconut acid | 16.8 | Ca(OH)₂ | 295 | 11.13 |
| 27 | Coconut acid | 16.8 | CaO | 90.2 | 4.86 |
| 28 | Mg-cocoate | 5 | CaCO₃ | | 11.5 |

For the hydrophobic additive according to example 27, the coconut acid is added to calcium oxide and stirred for 30 min. Water is then slowly added to the mixture, so that the calcium oxide is reacted to calcium hydroxide. The water is then removed.

For the hydrophobic additive according to example 28, the molten magnesium cocoate is added to calcium hydroxide at ambient temperature. Thus, the hydrophobic additive is obtained by physical coating.

| | Carboxylic acid (salt) | Amount of Carboxylic acid (salt) [%] | Inorganic carrier particle | W-value [%] (24h-Value) |
|---|---|---|---|---|
| 29 | Coconut acid | 5 | Al(OH)₃ | 8.9 |
| 30 | Coconut acid | 5 | Al(OH)₃ | 8.8 |
| 31 | Mg-cocoate | 5 | Al(OH)₃ | 12.0 |
| 32 | Mg-cocoate | 20 | Al(OH)₃ | 6.8 |

For the hydrophobic additive of examples 29, 31 and 32, the reaction is carried out at ambient temperature in the presence of water. The hydrophobic additive is precipitated, filtered, dried and milled.

For the hydrophobic additive of example 30, the reaction is carried out at 90°C in the presence of water. The hydrophobic additive is precipitated, filtered, dried and milled.

### Results of Volcano test

For the volcano test, lime-cement plaster with 0.25 % of hydrophobing agent is prepared 130 g of the lime-cement plaster is prepared in a volcano-shape (see figure 1) by
1. making a heap with a diameter of about 12 cm and a maximum height of 5 cm; and
2. making a hole with a depth of 1-2 cm in the middle of the heap using a beaker with a diameter of 4-5 cm.
Subsequently 5 mL of water are poured into the hole. The time until all water is dried up is determined at ambient temperature.

| Hydrophobic additive | Description | Time [min] |
|---|---|---|
| - | No hydrophobic additive | 36 |
| 2 | Mg-cocoate (D90 = 600 µm) | 164 |
| 6 | Mg(OH)₂ with 16.8 % coconut acid (140°C) D90 = 16.5 µm | 188 |
| 10 | Mg(OH)₂ with 16.8 % coconut acid (physical coating) | 188 |
| 12 | Mg(OH)₂ with 16.8 % stearic acid (physical coating) | 36 |
| 20 | Mg(OH)₂ with 16.8 % stearic acid (140°C) D90 = 65 µm | 36 |

## Claims

1. Hydrophobic additive comprising a mixture of
a. one or more inorganic carrier particles and
b. one or more salts of one or more carboxylic acids or one or more carboxylic acids or in the alternative both of one or more salts of one or more carboxylic acids and one or more carboxylic acids,
wherein the particle size distribution (psd) D90 of the mixture as powder measured with a Malvern Mastersizer 2000 is from 8 to 150 µm.

2. Hydrophobic additive according to claim 1, **characterized in that** the inorganic carrier particles are selected from oxides, hydroxides, carbonates, silicates, phosphates, and sulfates, of Li, Na, K, Ca, Mg, Ba, Zn, Al, Ti, Si or mixtures of two or more thereof.

3. Hydrophobic additive according to any of the preceding claims, **characterized in that** the salts of one or more carboxylic acids comprise a salt of a carboxylic acid with 6 to 14 C-atoms or a mixture of two or more salts of carboxylic acids with 6 to 14 C-atoms, the carboxylic acid salts preferably being selected from salts of caprylic acid, pelargonic acid, capric acid, lauric acid, myristic acid and undecylenic acid or the one or more carboxylic acids comprise a carboxylic acid with 6 to 14 C-atoms or a mixture of two or more carboxylic acids with 6 to 14 C-atoms, the carboxylic acids preferably being selected from salts of caprylic acid, pelargonic acid, capric acid, lauric acid, myristic acid and undecylenic acid, or both.

4. Hydrophobic additive according to any of the preceding claims, **characterized in that** the salts of one or more carboxylic acids comprise one or more salts of carboxylic acids with 10 to 16 C-atoms in an amount of at least 50 % by weight, or the one or more carboxylic acids comprise one or more carboxylic acids with 10 to 16 C-atoms in an amount of at least 50 % by weight, or both.

5. Hydrophobic additive according to any of the preceding claims, **characterized in that** it comprises 65 to 97 % by weight of inorganic carrier particles and 3 to 35% by weight of one or more salts of one or more carboxylic acids or one or more carboxylic acids or both.

6. Hydrophobic additive according to any of the preceding claims, **characterized in that** it is obtained by
a) reaction of one or more inorganic carrier particles selected from the group consisting of a reactive metal oxide or metal hydroxide or metal carbonate with one or more carboxylic acids under formation of one or more metal salts of one or more carboxylic acids as a product, and milling the product to a particle size distribution D90 in a range from 8 to 150 µm if the particle size distribution of the product is outside this range, or
b) mixing one or more inorganic carrier particles with one or more salts of one or more carboxylic acids at a temperature of 60°C or more than 60°C under formation of a product, and milling the product to a particle size distribution D90 in a range from 8 to 150 µm if the particle size distribution of the product is outside this range, or
c) mixing one or more inorganic carrier particles with one or more carboxylic acids at a temperature of more than 10°C under formation of a product, and milling the product to a particle size distribution D90 in a range from 8 to 150 µm if the particle size distribution of the product is outside this range, or
d) mixing one or more inorganic carrier particles with one or more salts of one or more carboxylic acids and one or more carboxylic acids at a temperature of 60°C or more than 60°C under formation of a product, and milling the product to a particle size distribution D90 in a range from 8 to 150 µm if the particle size distribution of the product is outside this range, or
e) reaction of one or more inorganic carrier particles selected from the group consisting of a reactive metal oxide or metal hydroxide with a triglyceride, preferably a natural, partially hydrogenated or fully hydrogenated fat or oil, preferably selected from the group consisting of cocos oil and palm kernel oil, under formation of one or more fatty acid metal salts as a product, and milling the product to a particle size distribution D90 in a range from 8 to 150 µm if the particle size distribution of the product is outside this range,
wherein the product is milled with a Malvern Mastersizer 2000 to have said particle size distribution (psd) D90 measured as powder.

7. Mineral binder, synthetic resin render or paint, comprising a hydrophobic additive according to any of claims 1 to 6.

8. Mineral binder, synthetic resin render or paint according to claim 7, **characterized in that** the hydrophobic additive is contained in an amount of 0.01 to 2 % by weight, preferably in an amount of from 0.04 to 0.7 % by weight, based on the total weight of the mineral binder.

9. Mineral binder, synthetic resin render or paint according to any of Claims 7 or 8, **characterized in that** the proportion of carboxylic acid salts of carboxylic acids having 8 to 17 carbon atoms, based on the total amount of carboxylic acid salts in the mineral binder, amounts to 20 % by weight or more than 20 % by weight, or **in that** the proportion of carboxylic acids 8 to 17 carbon atoms, based on the total amount of carboxylic acids in the mineral binder, amounts to 20 % by weight or more than 20 % by weight.

10. Mineral binder, synthetic resin render or paint according to any of Claims 7 to 9, **characterized in that** the average chain length of all of the carboxylic acid salts or of all of the carboxylic acids in the mineral binder is within a range from 12 to 16 carbon atoms.

11. Mineral binder, synthetic resin render or paint according to any of Claims 7 to 10, **characterized in that** the sum of the proportions of the salts of carboxylic acids with more than 16 carbon atoms in all of the carboxylic acid salts amounts to less than 50 % by weight, or the sum of the proportions of the carboxylic acids with more than 16 carbon atoms in all of the carboxylic acids amounts to less than 50 % by weight, or both.

12. Mineral binder according to any of claims 7 to 11, **characterized in that** it comprises
15 to 80 % of a mineral binder material,
0.01 to 2 % of the hydrophobic additive according to any of claims 1 to 6,
0 to 75 % of fillers,
0 to 30 % of binders,
0 to 25 % of at least one dispersant, emulsifier, surfactant or a combination of two or more thereof,
0 to 25 % of colloids, and
0 to 30 % of further additives.

13. Mineral binder according to any of claims 7 to 12, **characterized in that** the mineral binder prepared according to EN 1015-18 has a water uptake (W-value, 24 h) measured according to EN 1015-18 of 12 % or less, preferably of 10 % or less, more preferably of 8 % or less or 5 % or less.

14. Process for the preparation of a hydrophobic additive according to any of claims 1 to 5, wherein the process comprises
i. one or more inorganic carrier particles selected from the group consisting of a reactive metal oxide or metal hydroxide or metal carbonate are mixed and reacted with one or more carboxylic acids under formation of one or more metal salts of one or more carboxylic acids as a product, preferably at a temperature of more than ambient temperature, preferably more than 50°C, more preferably at 80°C to 160°C or
ii. one or more inorganic carrier particles are mixed with one or more salts of one or more carboxylic acids at a temperature of 60°C or more than 60°C under formation of a product, preferably at a temperature of from 60 to 140°C, or
iii. one or more inorganic carrier particles are mixed with one or more carboxylic acids at a temperature of 10°C or more, or 15°C or more, or 20°C or more or 25°C or more under formation of a product, preferably at a temperature of from 60 to 140°C, or
iv. one or more inorganic carrier particles are mixed with one or more salts of one or more carboxylic acids and one or more carboxylic acids at a temperature of 60°C or more than 60°C under formation of a product, preferably at a temperature of from 60 to 140°C, or
v. reaction of one or more inorganic carrier particles selected from the group consisting of a reactive metal oxide or metal hydroxide with a triglyceride, preferably a natural, partially hydrogenated or fully hydrogenated fat or oil, preferably selected from the group consisting of cocos oil and palm kernel oil, under formation of one or more fatty acid metal salts as a product,
and milling the product to a particle size distribution D90 in a range from 8 to 150 µm if the particle size distribution of the product is outside this range, wherein the product is milled with a Malvern Mastersizer 2000 to have said particle size distribution (psd) D90 measured as powder.

15. Process according to claim 14, wherein the carboxylic acids, salts of carboxylic acids, or both, are added to the inorganic carrier particles in liquid form, dissolved in a solvent or suspended in a liquid suspension medium, and the solvent or suspension medium can be removed prior to milling.

16. Intermediate compound comprising 0.1 to 90% by weight of a hydrophobic additive according to any of claims 1 to 6, and 10 to 99.9% of one or more additives selected from solvents, solubilizers, fillers, further hydrophobing agents, binders, surfactants, emulsifiers, viscosity improvers, surfactants, pigments, dyes, preservatives, gelating agents, anti-caking agents, pH modifiers, buffers, reaction accelerants, reaction retardants, colloids, aerating agents, dispersible polymer powders, water retainers, and combinations of two or more thereof.

17. Use of a hydrophobic additive according to any of claims 1 to 6 or of an intermediate compound according to claim 16, for improving the hydrophobicity of a mineral binder.
